(19) Europäisches Patentamt / European Patent Office / Office européen des brevets

(11) **EP 3 565 363 B1**

(12) **EUROPEAN PATENT SPECIFICATION**

(45) Date of publication and mention
of the grant of the patent:
**30.08.2023  Bulletin 2023/35**

(21) Application number: **19183141.1**

(22) Date of filing: **27.09.2016**

(51) International Patent Classification (IPC):
*H04W 74/00* (2009.01)   *H04L 27/26* (2006.01)

(52) Cooperative Patent Classification (CPC):
**H04L 27/26132; H04L 27/2636; H04W 74/004**

(54) **RANDOM ACCESS PREAMBLE FOR MINIMIZING PA BACKOFF**

DIREKTZUGRIFFSPRÄAMBEL ZUR MINIMIERUNG VON PA-BACKOFF

PRÉAMBULE D'ACCÈS ALÉATOIRE POUR MINIMISER LE DÉCALAGE DE PA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **28.09.2015  US 201562233822 P**

(43) Date of publication of application:
**06.11.2019  Bulletin 2019/45**

(62) Document number(s) of the earlier application(s) in
accordance with Art. 76 EPC:
**16781070.4 / 3 357 292**

(73) Proprietor: **Telefonaktiebolaget LM Ericsson
(publ)
164 83 Stockholm (SE)**

(72) Inventors:
• **LIN, Xingqin
Santa Clara, California 95054 (US)**
• **Hui, Dennis
Sunnyvale, California 94087 (US)**
• **ADHIKARY, Ansuman
500081 Hyderabad
Telengana (IN)**
• **WANG, Yi-Pin Eric
Fremont, California 94539 (US)**
• **JOHANSSON, Niklas
SE-753 29 Uppsala (SE)**
• **SUNDBERG, Mårten
SE-120 53 Årsta (SE)**
• **GRÖVLEN, Asbjörn
SE-112 15 Stockholm (SE)**
• **SUI, Yutao
SE-171 67 Solna (SE)**

(74) Representative: **Ericsson
Patent Development
Torshamnsgatan 21-23
164 80 Stockholm (SE)**

(56) References cited:
**WO-A1-2014/110714     US-A1- 2013 250 922**

**Description**

TECHNICAL FIELD

The present disclosure is generally related to wireless communications networks, and is more particularly related to a method for a user equipment, a method for a base station, a user equipment and a base station for generating a random access preamble signal.

BACKGROUND

Members of the 3rd Generation Partnership Project (3GPP) have agreed to define specifications for what is being called "NB-IoT," which refers to a "narrowband Internet of things." These standards will support wireless communications for low-power equipment that may rely on batteries and that will typically send and receive only small amounts of information. Example applications for wireless devices that support NB-IoT include providing parking meters, industrials sensors, and the like with wireless communication capabilities.

The radio interface for NB-IoT will be designed so that the technology can readily be deployed by operators in portions of their existing Long Term Evolution (LTE) spectrum. Thus, it is expected that certain aspects of the NB-IoT will be defined to make the most possible use of existing LTE hardware, designs, and procedures. However, changes to the LTE specifications are likely to be made at all levels of the specifications, to reduce power consumption, improve coverage, and otherwise provide for improved operation of low-power wireless equipment.

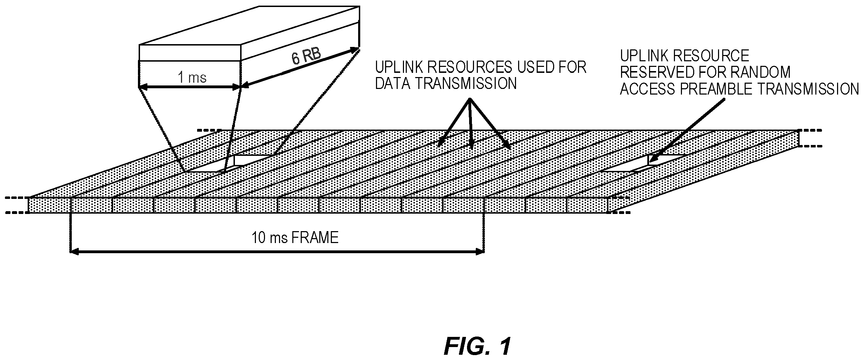

One aspect of the existing LTE specifications is random access. In LTE, as in most communication systems, a mobile terminal may need to contact the network, via the eNodeB (3GPP terminology for an LTE base station), without yet having a dedicated resource in the uplink (from user equipment, UE, to base station). To handle this, a random access procedure is available, whereby a UE that does not have a dedicated uplink resource may transmit a signal to the base station. In the process defined by the 3GPP specifications for LTE, the first message (MSG1 or preamble) of this procedure is transmitted on a special resource reserved for random access, a physical random access channel (PRACH). This channel is limited in time and frequency, as shown in Figure 1. The resources available for PRACH transmissions are identified to mobile terminals as part of the broadcasted system information or as part of dedicated Radio Resource Control (RRC) signaling in some cases, such as in the case of a handover.

In LTE, the random access procedure is used for a number of different reasons. Among these reasons are:

- initial access, for UEs in the LTE_IDLE or LTE_DETACHED states;
- an incoming handover;
- resynchronization of the uplink;
- a scheduling request, for a UE that is not allocated any other resource for contacting the base station; and
- positioning.

To preserve orthogonality among different user equipments (UEs - 3 GPP terminology for radio access terminals, including cellular telephones and machine-to-machine radio devices) in an orthogonal frequency-division multiple-access (OFDMA) or single-carrier frequency-division multiple-access (SC-FDMA) system, the time of arrival of each UE signal needs to be within the cyclic prefix (CP) of the OFDM or SC-FDMA signal. It will be appreciated that the term cyclic prefix in background art refers to the prefixing of an OFDM symbol with a repetition of the symbol's end. The cyclic prefix acts as a guard interval, so as to eliminate inter-symbol interference from the previous symbol. It also allows the linear convolution of a channel to be modelled as circular convolution, which can be performed in the frequency domain with a discrete Fourier transform. This frequency-domain processing simplifies demodulation processes in an LTE receiver.

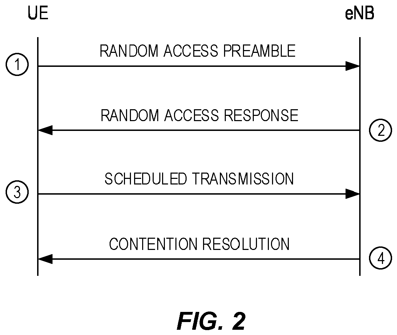

LTE random access can be either contention-based or contention-free. The contention-based random access procedure consists of four steps, as illustrated in Figure 2. Note that only the first step involves physical-layer processing specifically designed for random access, while the remaining three steps follow the same physical-layer processing used in uplink and downlink data transmission. The eNodeB can order the UE, through a Physical Downlink Control Channel (PDCCH), to perform a contention based random access. The UE starts the random access procedure by randomly selecting one of the preambles available for contention-based random access. The UE then transmits the selected random access preamble on the PRACH to the eNodeB in the Radio Access Network (RAN), shown in Figure 2 as step 1.

The RAN acknowledges any preamble it detects by transmitting a random access response, which includes an initial grant to be used on the uplink shared channel, a temporary Cell Radio Network Temporary Identification (C-RNTI) for the UE, and a time alignment (TA) update. The TA update is based on the timing offset of the preamble measured by the eNodeB on the PRACH. The random access response is transmitted in the downlink to the UE (step 2) and its corresponding PDCCH message cyclic redundancy code (CRC) is scrambled with a Random Access Radio Network Temporary Identifier (RA-RNTI).

After receiving the random access response, the UE uses the grant to transmit a message back to the RAN (step 3). This message is used, in part, to trigger the establishment of RRC and in part to uniquely identify the UE on the common channels of the cell. The timing advance command that was provided to the UE in the random access response is applied in the UL transmission in message transmitted back to the RAN. The eNodeB can change the resources blocks that are assigned for transmission of this message of step 3 by sending a UL grant having its CRC scrambled with a Temporary Cell Radio Network Temporary Identifier (TC-RNTI).

The procedure ends with the RAN solving any preamble contention that may have occurred for the case that multiple UEs transmitted the same preamble at the same time. This can occur when each UE randomly selects when to transmit and which preamble to use. If multiple UEs select the same preamble for the transmission at the same time on the Random Access Channel (RACH), there will be contention between these UEs. The RAN resolves this contention using the contention resolution message, seen as step 4 in Figure 2. This message, which is sent by the eNodeB for contention resolution, has its PDCCH CRC scrambled with the C-RNTI if the UE previously has a C-RNTI assigned. If the UE does not have a C-RNTI previously assigned has its PDCCH CRC is scrambled with the TC-RNTI.

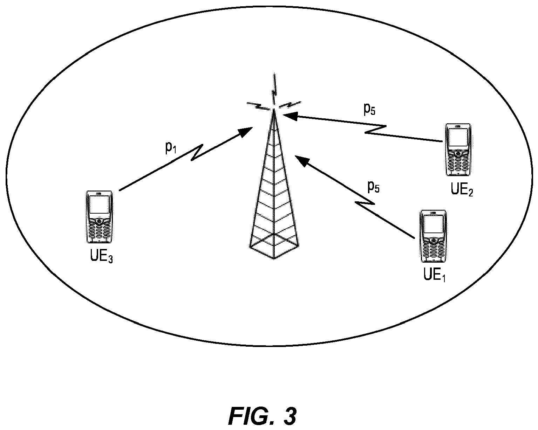

A scenario where contention occurs is illustrated in Figure 3, where two UEs transmit the same preamble, $p_5$, at the same time. A third UE also transmits a random access preamble at the same time, but since it transmits with a different preamble, $p_1$, there is no contention between this UE and the other two UEs.

For contention-free random access, the UE uses reserved preambles assigned by the base station. In this case, contention resolution is not needed, and thus only steps 1 and 2 of Figure 2 are required. A non-contention-based random access or contention-free random access can be initiated by the eNodeB, for example, to get the UE to achieve synchronization in the uplink. The eNodeB initiates a non-contention-based random access either by sending a PDCCH order or indicating it in an RRC message. The latter of these two approaches is used in the case of a handover.

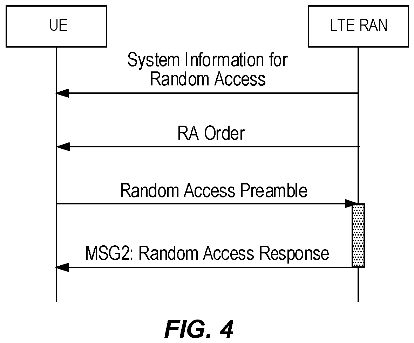

The procedure for the UE to perform contention-free random access is illustrated in Figure 4. As with the contention-based random access, the random access response is transmitted in the downlink to the UE and its corresponding PDCCH message CRC is scrambled with the RA-RNTI. The UE considers the contention resolution successfully completed after it has received the random access response successfully. For the contention-free random access, as for the contention-based random access, the random access response contains a timing alignment value. This enables the eNodeB to set the initial/updated timing according to the UEs transmitted preamble.

Efforts currently underway with respect to the so-called Networked Society and Internet of Things (IoT) are associated with new requirements on cellular networks, e.g., with respect to device cost, battery lifetime and coverage. To drive down device and module cost for the small wireless devices that are expected to become ubiquitous, using a system-on-a-chip (SoC) solution with integrated power amplifier (PA) is highly desirable. However, it is currently feasible for state-of-the-art PA technology to allow only about 20-23 dBm transmit power when the power amplified is integrated to the SoC. This constraint on output power from the SoC solution limits uplink coverage, which is related to how much the path loss is allowed between the user terminal and base station.

Further, to maximize the coverage achievable by an integrated PA, it is necessary to reduce PA backoff. PA backoff is needed when the communication signal has a non-unity peak-to-average power ratio (PAPR), i.e., when the communication signal is not a constant envelope signal. To avoid spurious signals and out-of-band emissions from the PA when amplifying a non-constant-envelope signal, the PA must be operated at or near its linear operating region, i.e., it must be "backed off" from its high-efficiency, nonlinear operating region. The higher the PAPR is, the higher the PA backoff required. Because higher PA backoff gives rise to lower PA efficiency, it lowers device battery life time. Thus, for wireless IoT technologies, designing an uplink communication signal that has as low PAPR as possible is critically important for achieving the performance objectives for IoT devices with respect to device cost, battery lifetime and coverage. An example is known from WO 2014/110714 A1.

SUMMARY

Currently 3GPP is standardizing Narrow-band IoT (NB-IoT) technologies. There is a strong support from the existing LTE eco-system (vendors and operators) for evolving existing LTE specifications to include the desired NB-IoT features. This is motivated by the time-to-market consideration, since an LTE based NB-IoT solution can be standardized and developed in a shorter time frame. A leading candidate for NB-IoT is a LTE-based NB-LTE solution.

The LTE uplink (mobile-station-to-base-station transmissions) is based on single-carrier frequency-division multiple-access (SC-FDMA) modulation for the uplink data and control channels. For random access preamble transmission, a Zadoff-Chu signal is used. Neither of these signals has good PAPR properties.

To resolve this problem, a new random access preamble signal is disclosed herein. This signal is appropriate for the physical random access channel (PRACH) of NB-IoT. The new PRACH signal achieves 0 dB PAPR, and thus eliminates the need for PA backoff and maximizes PA efficiency. The new PRACH signal is compatible with the use of SC-FDMA and/or orthogonal frequency-division multiple-access (OFDMA) for transmissions of uplink data and control channel signals, since the new PRACH signal, in any given OFDM symbol interval, looks like an OFDM signal occupying only a single subcarrier. Note that for a single subcarrier signal, an OFDM signal is identical to the corresponding SC-FDMA signal.

Since the new PRACH signal achieves 0 dB PAPR, it eliminates the need for PA backoff and maximizes PA efficiency. Thus, it maximizes the PRACH coverage and battery efficiency. The new PRACH signal is compatible with SC-FDMA and orthogonal frequency-division multiple-access (OFDMA). Thus, it can be easily implemented using existing SC-FDMA or OFDMA signal generator. This reduces both development cost and time-to-market.

The invention is defined in the appended claims.

BRIEF DESCRIPTION OF THE DRAWINGS

Figure 1 is a diagram illustrating random access preamble transmission.

Figure 2 is a diagram illustrating signaling for the contention-based random access procedure in LTE.

Figure 3 illustrates contention based random access, where there is contention between UEs.

Figure 4 is a diagram illustrating signaling over the air interface for the contention-free random access procedure in LTE.

Figure 5 is a diagram illustrating a cyclic prefix, guard period and preamble sequence for PRACH.

Figure 6 illustrates an example PRACH signal for one OFDM symbol.

Figure 7 is a diagram illustrating an example PRACH signal over multiple OFDM symbol intervals, according to some embodiments.

Figure 8 is a diagram illustrating frequency multiplexing of two PRACH preambles, according to some embodiments.

Figure 9 illustrates frequency multiplexing of two PRACH preambles (time-domain signal), according to some embodiments.

Figure 10 is a diagram illustrating an example of CP duration that is one fourth of the OFDM data symbol duration, according to some embodiments.

Figure 11 is a block diagram of a user equipment configured to perform a random access procedure, according to some embodiments.

Figure 12 is a flowchart illustrating a method in a user equipment for performing a random access procedure, according to some embodiments.

Figure 13 is a block diagram of a network node configured to signal information pertaining to a random access procedure, according to some embodiments.

Figure 14 is a flowchart illustrating a random access procedure, according to some embodiments.

Figure 15 is a block diagram of a functional implementation of a user equipment for performing a random access procedure, according to some embodiments.

Figure 16 is a block diagram of a functional implementation of a network node for receiving reports pertaining to a random access procedure, according to some embodiments.

DETAILED DESCRIPTION

Inventive concepts will now be described more fully hereinafter with reference to the accompanying drawings, in which examples of embodiments of inventive concepts are shown. These inventive concepts may, however, be embodied in many different forms and should not be construed as limited to the embodiments set forth herein. Rather, these embodiments are provided so that this disclosure will be thorough and complete, and fully convey the scope of present inventive concepts to those skilled in the art. It should also be noted that these embodiments are not mutually exclusive. Components from one embodiment may be tacitly assumed to be present or used in another embodiment.

For purposes of illustration and explanation only, embodiments of the present inventive concepts are described herein in the context of operating in or in association with a RAN that communicates over radio communication channels with mobile terminals, also interchangeably referred to as wireless terminals or UEs, using a particular radio access technology. More specifically, embodiments are described in the context of the development of specifications for NB-IoT, particularly as it relates to the development of specifications for NB-IoT operation in spectrum and/or using equipment currently used by E-UTRAN, sometimes referred to as the Evolved UMTS Terrestrial Radio Access Network and widely known as the LTE system. However, it will be appreciated that the techniques may be applied to other wireless networks, as well as to successors of the E-UTRAN. Thus, references herein to signals using terminology from the 3GPP standards for LTE should be understood to apply more generally to signals having similar characteristics and/or purposes, in other networks.

Note that in some of the embodiments described herein, the terms "user equipment" and "UE" are used. A UE, as that term is used herein, can be any type of wireless device capable of communicating with a network node or another UE over radio signals. In the context of the present disclosure, it should be understood that a UE may refer to a machine-to-machine (M2M) device, a machine-type communications (MTC) device, and/or a NB-IoT device, where the UE has no "user" in the sense of an individual person owning and/or operating the device. A UE may also be referred to as a wireless device, a radio device, a radio communication device, a wireless terminal, or simply a terminal - unless the context indicates otherwise, the use of any of these terms is intended to include device-to-device UEs, machine-type UEs or UEs capable of machine-to-machine communication, sensors equipped with a UE, wireless-enabled table computers, mobile terminals, smart phones, laptop-embedded equipped (LEE), laptop-mounted equipment (LME), USB dongles, wireless customer-premises equipment (CPE), etc. In the discussion that follows, the terms machine-to-machine (M2M) device, machine-type communication (MTC) device, wireless sensor, and sensor may also be used. It should be understood that these devices are UEs, but are generally configured to transmit and/or receive data without direct human interaction.

In the existing LTE random access design, random access serves multiple purposes such as initial access when establishing a radio link, scheduling request, etc. Among others, a main objective of random access is to achieve uplink synchronization, which is important for maintaining the uplink orthogonality in LTE. To preserve orthogonality among different user equipments (UE) in an OFDM or SC-FDMA system, the time of arrival of each UE signal needs to be within the cyclic prefix (CP) of the OFDM or SC-FDMA signal.

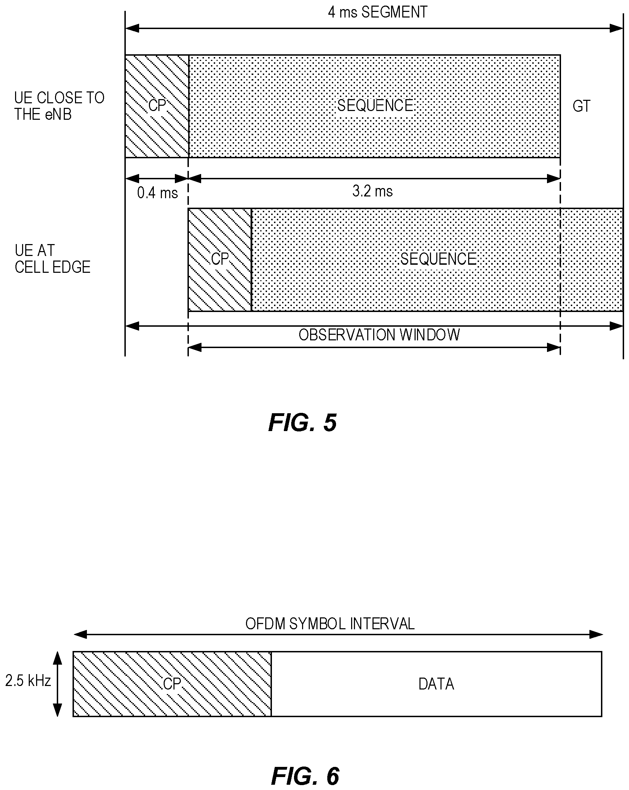

As discussed in the Background section above, a cyclic prefix (CP) is used to provide a guard time between consecutive symbols and, especially in the context of OFDMA and/or SC-FDMA transmissions, to simplify the receiver processing. Figure 5 illustrates how a CP could be used for a transmitted OFDMA/SC-FDMA symbol that forms all or part of physical random access channel (PRACH) preamble sequence. As shown in Figure 5, a PRACH preamble sequence is sent by the UE during a random access time segment illustrated in Figure 5. In the illustrated example, the transmission has a duration of 3.6 milliseconds, including a CP duration of 400 microseconds and a data interval of 3.2 milliseconds. The PRACH preamble sequence does not occupy the entire random access segment, leaving some time as guard time and also allow a cyclic prefix (CP) interval.

As discussed above, 3GPP is defining specifications for NB-IoT, which will support wireless communications for low-power equipment that may rely on batteries and that will typically send and receive only small amounts of information. It is desirable that the specifications for NB-IoT, where possible, facilitate the re-use of existing designs and techniques, and facilitate deployment in existing LTE spectrum. The previously existing LTE uplink (mobile-station-to-base-station transmissions), however, is based on single-carrier frequency-division multiple-access (SC-FDMA) modulation for the uplink data and control channels. For random access preamble transmission, a Zadoff-Chu signal is used. Neither of these signals has good PAPR properties, however, which creates problems for low-power ad low-cost devices, especially those relying on an integrated system-on-chip (SoC) system.

To resolve this problem, a new random access preamble signal is disclosed herein. This signal is appropriate for the physical random access channel (PRACH) of NB-IoT. The new PRACH signal achieves 0 dB PAPR, and thus eliminates the need for PA backoff and maximizes PA efficiency. The new PRACH signal is compatible with the use of SC-FDMA and/or orthogonal frequency-division multiple-access (OFDMA) for transmissions of uplink data and control channel signals, since the new PRACH signal, in any given OFDM symbol interval, looks like an OFDM signal occupying only a single subcarrier. Note that for a single subcarrier signal, an OFDM signal is identical to the corresponding SC-FDMA signal.

Since the new PRACH signal achieves 0 dB PAPR, it eliminates the need for PA backoff and maximizes PA efficiency. Thus, it maximizes the PRACH coverage and battery efficiency. The new PRACH signal is compatible with SC-FDMA and orthogonal frequency-division multiple-access (OFDMA). Thus, it can be easily implemented using existing SC-FDMA or OFDMA signal generator. This reduces both development cost and time-to-market.

In Figure 5, two PRACH preamble transmissions are shown, with one coming from a UE close to the eNB (LTE terminology for a node that includes radio base station functionality) and the other from a UE far from the base station, at the cell edge. It can be seen that this results in a difference in timing for the two transmissions, relative to a random access interval maintained in the eNB receiver.

The use of the CP allows the receiver to perform a circular convolution using, in this example, a 3.2-millisecond portion of the signal, centered in a 4-millisecond random access interval window. The eNB receiver will have similar performance for both the near-eNB and near-cell-edge cases.

As discussed earlier, to maximize PA efficiency and coverage, it is desirable to have PRACH preambles as close to constant-envelope as possible. A constant-envelope signal has 0 dB PAPR, and does not require PA backoff. In the below description, we will use PRACH signal and PRACH preamble interchangeably.

LTE random access can be either contention-based or contention-free. The contention-based random access procedure consists of four steps, as illustrated in Figure 2 and discussed above. Note that only the first step involves physical-layer processing specifically designed for random access, while the remaining three steps follow the same physical-layer processing used in uplink and downlink data transmission. For contention-free random access, the UE uses reserved preambles assigned by the base station. In this case, contention resolution is not needed, and thus only steps 1 and 2 are required. The techniques for random access preamble transmission discussed below may be used in either or both contention-free and contention-based random access procedures.

An example PRACH signal during a single OFDM symbol interval, according to some embodiments of the presently disclosed techniques, is shown in Figure 6. It is basically a single-tone (single-subcarrier) OFDM signal. According to the example in Figure 6, the subcarrier spacing is 2.5 kHz. However, the techniques described herein may be applied to any subcarrier spacing.

According to some embodiments of the presently disclosed techniques, the PRACH signal is spread in time over multiple OFDM symbols, instead of spread in frequency (as in the LTE case). Thus, a number of OFDM symbols, each one as illustrated in Figure 6, are concatenated to form a PRACH preamble. As will be discussed in further detail below, in some embodiments the generated random access preamble signal comprises two or more, or *N*, consecutive preamble symbols, also referred to herein as preamble symbol groups or symbol groups, with each preamble symbol group comprising a plurality of duplicated OFDM symbols and being formed to produce a single tone in the transmitted random access preamble signal. In other words, each preamble symbol group comprises a plurality of identical symbols occupying a single subcarrier of the SC-FDMA random access preamble signal, such that the single subcarrier for at least one of the preamble symbol groups corresponds to a first subcarrier frequency and the single subcarrier for an immediately subsequent one of the preamble symbol groups corresponds to a second subcarrier frequency. The subcarrier frequency changes between preamble symbol groups, such that the single tone for a first one of the consecutive symbol groups corresponds to a first subcarrier frequency and the single tone for a subsequent one of the symbol groups corresponds to a second subcarrier frequency. In other words, each preamble symbol group comprises a plurality of identical symbols occupying a single subcarrier of the SC-FDMA random access preamble signal, such that the single subcarrier for at least one of the preamble symbol groups corresponds to a first subcarrier frequency and the single subcarrier for an immediately subsequent one of the preamble symbol groups corresponds to a second subcarrier frequency.

The subcarrier frequencies change according to a simple pattern, where the single tone for every second preamble symbol corresponds to a first subcarrier frequency and the single tone for the remaining preamble symbols corresponds to a second subcarrier frequency. Thus, the preamble signal hops between two subcarrier frequencies, from one preamble symbol group to the next. It will be appreciated, of course that other, not claimed, are possible.

As explained in further detail below, each of the consecutive preamble symbols may be formed by repeating a basic OFDM symbol a plurality of times. It should be understood that the term symbol group, as used herein, may refer to a preamble symbol group formed in such a manner; thus a preamble symbol does not correspond to a basic OFDM symbol, but instead may comprise a plurality of duplicated OFDM symbols. As noted above, a single-tone OFDM signal is also a SC-FDMA signal, so these duplicated OFDM symbols may also be understood to be SC-FDMA symbols.

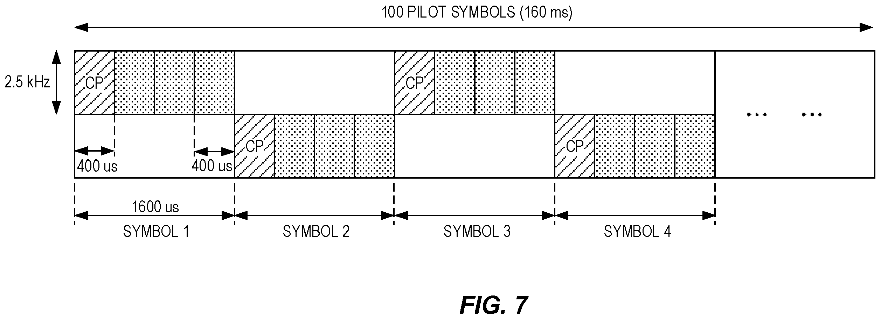

An example random access preamble signal design is shown in Figure 7. In this example, the PRACH preamble consists of 100 preamble symbols in time and occupies one tone/subcarrier (of 2.5 kHz) in frequency, for any given preamble symbol interval. However, the transmission in this example hops between two adjacent tones from one preamble symbol group to the next. This hopping is used to enable satisfactory time-of-arrival estimation performance at the base station. As noted above, this 2.5 kHz is simply an example - other subcarrier spacings are possible. Further, it should be apparent that the tones need not be adjacent - the hopping skips several subcarriers.

Since the tone (subcarrier) bandwidth/spacing in this example is 2.5 kHz, the duration of the data part of a normal OFDM symbol would be 400 microseconds, according to the well-known relationship between subcarrier spacing and OFDM symbol length. To support a cell size of up to, for example, 60 km, a CP of length 400 microseconds is needed to accommodate the maximum round-trip delay. A direct transmission of a 400 microsecond data part and a 400 microsecond CP would lead to a 50% CP overhead out of the total resource. To reduce the overhead, a basic OFDM symbol is repeated four times, in the example illustrated in Figure 7, resulting in a 1600-microsecond symbol duration. The first copy of the OFDM symbol is treated by the base station receiver as CP, while the remaining three copies are treated as data. This design reduces the CP overhead from 50% down to 25%. The base station can coherently combine the three copies of the symbol and thereby obtain about 4.8 dB power gain.

To see the 0 dB PAPR property of the preamble in Figure 7, consider, without loss of generality, OFDM symbols 1 and 2 that can be written as:

$$x(t) = x[1]e^{j2\pi\frac{k}{T}t}, \ t \in [0, \ 4T]$$

$$x(t) = x[2]e^{j2\pi\frac{k+1}{T}t}, \ t \in [4T, \ 8T]$$

where T=400 microseconds and k is the subcarrier index, for subcarriers with subcarrier spacings of 1/T. Within each OFDM symbol of length 4T, the waveform is of constant envelope, since within time intervals [0, 4T] and [4T, 8T] the signal is sinusoidal. At symbol boundary, the phase difference is

$$\text{phase}\left( x^*[1]e^{-j2\pi\frac{k}{T}4T}x[2]e^{j2\pi\frac{k+1}{T}4T} \right) = \text{phase}( x^*[1]x[2] )$$

Therefore, sending a constant sequence, i.e., where x[1] = x[2], that alternates between the two tones, guarantees phase continuity and yields 0 dB PAPR theoretically.

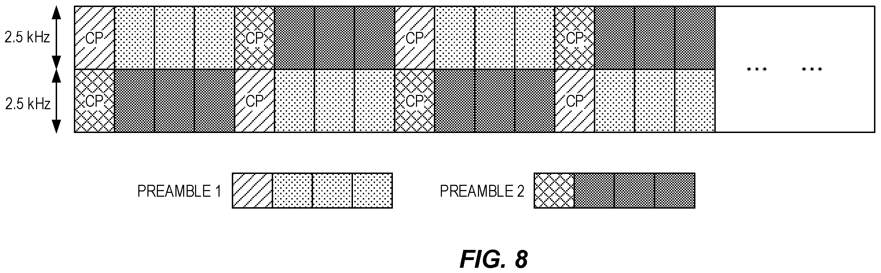

Since each PRACH preamble effectively only uses one 2.5 kHz subcarrier at any given time, different preambles can be multiplexed in the frequency domain. For example, Figure 8 shows the multiplexing of two PRACH preambles. In general, *M* tones can be configured for multiplexing M PRACH preambles. Each PRACH preamble uses one tone during one OFDM symbol interval, and the multiplexing pattern (e.g., as shown in Figure 8) ensures that no two UEs use the same tone during the same OFDM symbol interval.

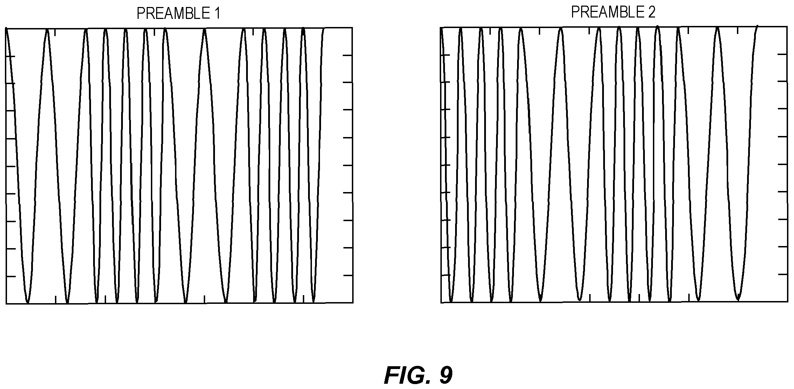

Figure 8 illustrates the frequency-domain arrangement of the two PRACH preambles. Examples of the corresponding time-domain signals are shown in Figure 9, where an interval of about four preamble symbol groups is shown for each preamble signal. First, it can be seen that phase-continuity is preserved in each of the preambles. Second, it can be seen that preamble 1 starts with a lower-frequency sinusoidal, switching to a higher-frequency sinusoidal, the lower-frequency sinusoidal, and finally switching again to a higher-frequency sinusoidal. Preamble 2 starts with the higher-frequency sinusoidal, switching to the lower-frequency sinusoidal, higher-frequency sinusoidal, and finally switching again to the lower-frequency sinusoidal. These two preambles are orthogonal to each other if their differential arrival time at the base station is within the CP interval. Note that in both of the illustrated examples, there is phase continuity between the lower-frequency and higher-frequency sinusoids. It will be appreciated that the low-to-high and high-to-low sequences of the two preambles may be pre-configured in each of the radio devices sending the preambles, or may result from a random selection of a configuration by the radio devices.

It will be appreciated that the presently disclosed techniques can be generalized to any CP duration, or any relationship between the CP duration and normal data duration within a preamble symbol group. However, the hopping distance in frequency should be adjusted accordingly, to maintain phase continuity at OFDM symbol boundaries where transitioning between frequency tones occurs. This is important in maintaining the constant envelope property.

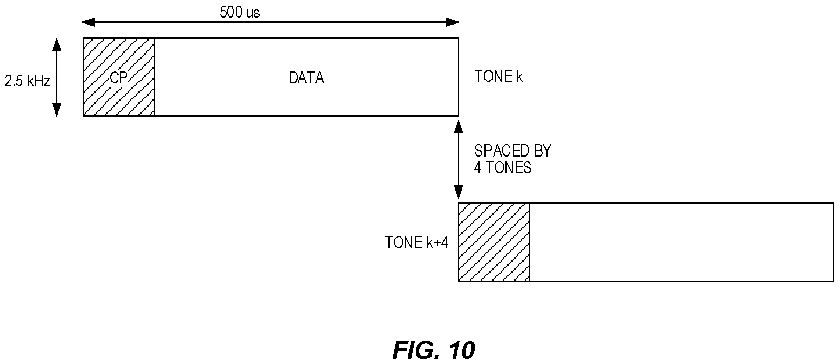

An example is given in Figure 10. Here the subcarrier spacing (tone bandwidth) is still 2.5 kHz, and thus the nominal data symbol duration (T) is 1/ 2500, i.e. 400 microseconds, which, in an OFDM context, implies a subcarrier spacing of 2.5 kHz. As shown, the CP is 100 us, and thus is one fourth of the nominal data symbol duration. Note that the OFDM symbol duration is thus 1.25T (CP plus data). Consider OFDM symbols 1 and 2, which can be written as

$$x(t) = x[1]e^{j2\pi\frac{k}{T}t},\ \ t \in [0,\ 1.25T]$$

$$x(t) = x[2]e^{j2\pi\frac{k+4}{T}t},\ \ t \in [1.25T,\ 2.5T]$$

where T=400 us. Within each OFDM symbol of length 1.25T, the waveform is of constant envelope. At symbol boundary, the phase difference is

$$\text{phase}\left( x^*[1]e^{-j2\pi\frac{k}{T}(1.25T)}x[2]e^{j2\pi\frac{k+4}{T}(1.25T)} \right) = \text{phase}( x^*[1]x[2] )$$

Therefore, sending a constant sequence, i.e., where x[1] = x[2], that alternates between two subcarriers that are 4 tones apart, guarantees phase continuity and yields 0 dB PAPR theoretically.

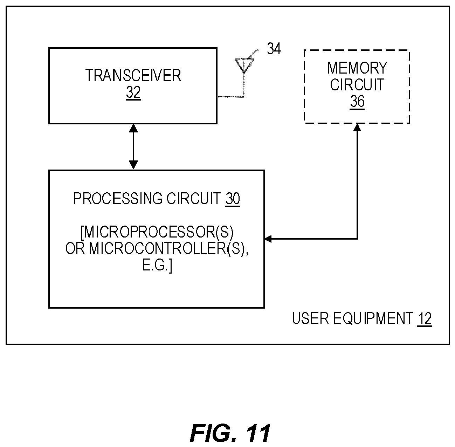

Figure 11 shows an example radio device, here illustrated as a UE 12, which may be more generally referred to a wireless terminal and which can be used in one or more of the example embodiments described herein. The UE 12 may in some embodiments be a mobile device that is configured for operation according to specifications for NB-IoT. The UE 12 comprises a processing circuit 30 that controls the operation of the UE 12. The processing circuit 30, which may comprise one or more microprocessors, microcontrollers, digital signal processors, specialized digital logic, etc., for example, is connected to a receiver or transceiver circuit 32 with associated antenna(s) 34, which are used to receive signals from or both transmit signals to and receive signals from a base station 10 in the network 2. The UE 12 also comprises a memory circuit 36 that is connected to the processing circuit 30 and that stores program code and other information and data required for the operation of the UE 12. Together, the processing circuit 30 and memory circuit 36 may also be referred to as a processing circuit, and are adapted, in various embodiments, to carry out one or more of the UE-based techniques described herein.

For example, the processing circuit of UE 12 may be configured to generate a SC-FDMA random access preamble signal comprising two or more consecutive preamble symbol groups, each preamble symbol group comprising a cyclic prefix portion and a plurality of identical symbols occupying a single subcarrier of the SC-FDMA random access preamble signal, such that the single subcarrier for at least one of the preamble symbol groups corresponds to a first subcarrier frequency and the single subcarrier for an immediately subsequent one of the preamble symbol groups corresponds to a second subcarrier frequency. The processing circuit of UE 12 is further configured to transmit the random access preamble signal. As discussed in the examples described above, the single subcarrier for at least one of the preamble symbol groups corresponds to a first subcarrier frequency and the single subcarrier for an immediately subsequent one of the preamble symbol groups corresponds to a second subcarrier frequency. In some embodiments, every second one of the preamble symbol groups corresponds to the second subcarrier frequency and each of the remaining preamble symbol groups corresponds to the first subcarrier frequency.

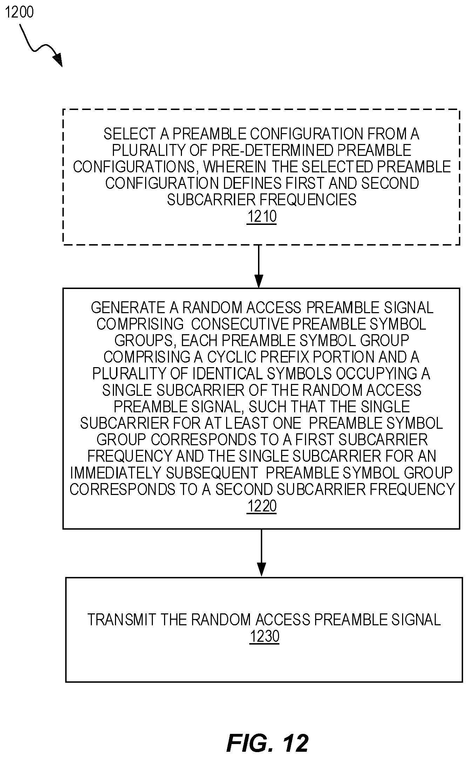

Regardless of the implementation, the processing circuit of UE 12 is configured to perform a method 1200 as shown in Figure 12. As shown at block 1220, the method 1200 includes generating an SC-FDMA random access preamble signal comprising two or more consecutive preamble symbol groups, each preamble symbol group comprising a cyclic prefix portion and a plurality of identical symbols occupying a single subcarrier of the SC-FDMA random access preamble signal, such that the single subcarrier for at least one of the preamble symbol groups corresponds to a first subcarrier frequency and the single subcarrier for an immediately subsequent one of the preamble symbol groups corresponds to a second subcarrier frequency; in some embodiments, every second one of the preamble symbol groups corresponds to the second subcarrier frequency and each of the remaining preamble symbol groups corresponds to the first subcarrier frequency. The method 1200 also includes transmitting the random access preamble signal, as shown at block 1230. In some cases, the method 1200 may include selecting a preamble configuration from a plurality of pre-determined preamble configurations, where the selected preamble configuration defines the first and second subcarrier frequencies, as shown at block 1210, and where the SC-FDMA random access preamble signal is generated using the selected preamble configuration. This selection may be performed randomly, in some embodiments.

In some embodiments, all of the preamble symbol groups have the same complex amplitude. In some embodiments, the first and second subcarrier frequencies are selected so as to enable phase continuity at the boundaries between preamble symbols. The preamble symbol groups are then generated so as to provide phase continuity at the boundaries between preamble symbol groups.

In some embodiments, the second subcarrier frequency is adjacent to the first subcarrier frequency. In some of these and in other embodiments, the length of the cyclic prefix portion is the same as the length of each of the identical symbols, and the cyclic prefix portion is identical to each of the identical symbols. In others, the length of the cyclic prefix portion is one quarter of the length of each of the identical symbols.

In some embodiments, each preamble symbol group has a total length of 1600 microseconds. In some embodiments, the plurality of identical symbols in each preamble symbol group consists of three identical symbols.

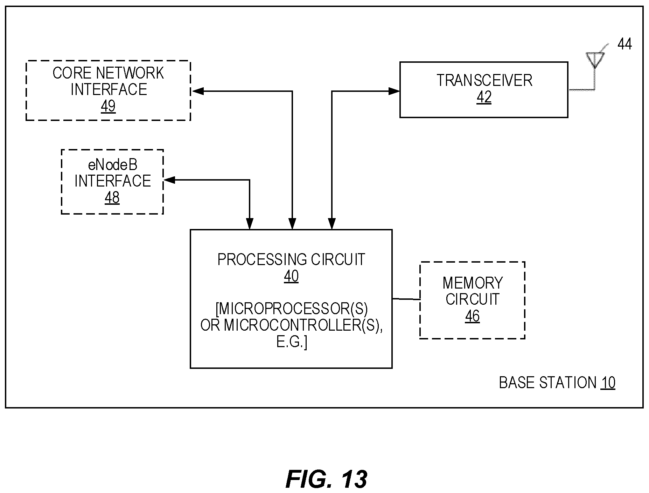

Figure 13 shows another example radio device, in this case illustrating a network node, such as a base station 10, that is configured to receive a random access preamble signal from the UE 12. In the description of some embodiments below, the terminology "radio network node" or simply "network node" or "NW node" is used. These terms refer to any kind of network node in the fixed portion of the wireless communication network, such as a base station, a radio base station, a base transceiver station, a base station controller, a network controller, an evolved Node B (eNodeB or eNB), a Node B, a relay node, a positioning node, a E-SMLC, a location server, a repeater, an access point, a radio access point, a Remote Radio Unit (RRU) Remote Radio Head (RRH), a multi-standard radio (MSR) radio node such as MSR base station nodes in distributed antenna system (DAS), a SON node, an O&M, OSS, or MDT node, a core network node, an MME, etc. As can be seen from these example, the term "fixed portion" of the wireless communication network is meant to refer to the portion of the wireless network other than the access terminals, i.e., the portion of the network that is accessed through a radio link by UEs, NT-IoB devices, and the like, and is not meant to preclude the possibility that one or more elements in a given scenario can be moved.

Figure 13 shows a base station 10 (for example an eNB) that can be used in some of the example embodiments described herein. It will be appreciated that although a macro eNB will not, in practice, be identical in size and structure to a micro eNB, for the purposes of illustration, the base stations 10 are assumed to include similar components. Thus, whether or not base station 10 corresponds to a macro base station or a micro base station, it comprises a processing circuit 40 that controls the operation of the base station 10. The processing circuit 40, which may include one or more microprocessors, microcontrollers, digital signal processors, specialized digital logic, etc., is connected to a transceiver circuit 42 with associated antenna(s) 44 that are used to transmit signals to, and receive signals from, UEs 12 in the network. The base station 10 also comprises a memory circuit 46 that is connected to the processing circuit 40 and that stores program and other information and data required for the operation of the base station 10. Together, the processing circuit 40 and memory circuit 46 may also be referred to as a processing circuit, and are adapted, in various embodiments, to carry out one or more of the network-based techniques described below.

Base station 10 also includes components and/or circuitry 48 for allowing the base station 10 to exchange information with other base stations 10 (for example, via an X2 interface) and components and/or circuitry 49 for allowing the base station 10 to exchange information with nodes in the core network (for example, via an S1 interface). It will be appreciated that base stations for use in other types of network (e.g., UTRAN or Wideband Code Division Multiple Access or WCDMA RAN) will include similar components to those shown in Figure 13 and appropriate interface circuitry 48, 49 for enabling communications with the other network nodes in those types of networks (e.g., other base stations, mobility management nodes and/or nodes in the core network).

The processing circuit of base station 10 is configured to receive a radio-frequency signal and detect, in the radio-frequency signal, a first SC-FDMA random access preamble signal, transmitted by a first remote radio device. The first SC-FDMA random access preamble signal comprises two or more consecutive preamble symbols(which may also be referred to as preamble symbol groups), each preamble symbol group comprising a cyclic prefix portion and a plurality of identical symbols occupying a single subcarrier of the SC-FDMA random access preamble signal, such that the single subcarrier for at least one of the preamble symbol groups corresponds to a first subcarrier frequency and the single subcarrier for an immediately subsequent one of the preamble symbol groups corresponds to a second subcarrier frequency. In some embodiments, every second one of the preamble symbol groups corresponds to the second subcarrier frequency and each of the remaining preamble symbol groups corresponds to the first subcarrier frequency. In some cases, the processing circuit is configured to estimate a time-of-arrival for the first preamble signal.

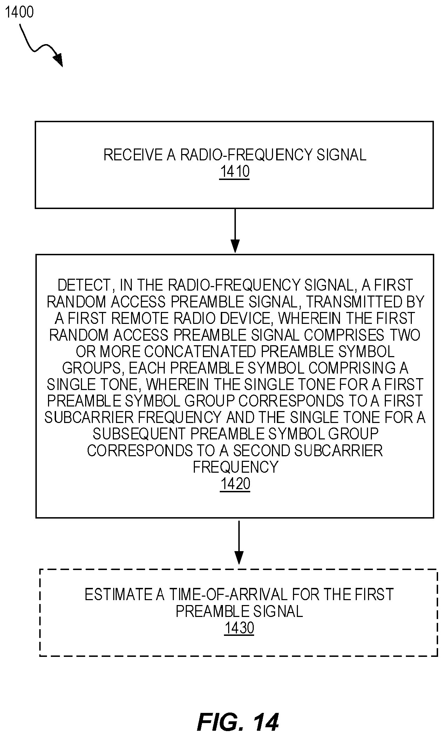

Regardless of the implementation, the processing circuit of base station 10 is also configured to perform a method 1400, as shown in Figure 14. The method 1400 includes receiving a radio-frequency signal (Block 1410). The method 1400 also includes detecting, in the radio-frequency signal, a first SC-FDMA random access preamble signal, transmitted by a first remote radio device (Block 1420). The first random access preamble signal comprises two or more consecutive preamble symbol groups, each preamble symbol group comprising a cyclic prefix portion and a plurality of identical symbols occupying a single subcarrier of the SC-FDMA random access preamble signal, such that the single subcarrier for at least one of the preamble symbol groups corresponds to a first subcarrier frequency and the single subcarrier for an immediately subsequent one of the preamble symbol groups corresponds to a second subcarrier frequency. Again, in some embodiments, every second one of the preamble symbol groups corresponds to the second subcarrier frequency and each of the remaining preamble symbol groups corresponds to the first subcarrier frequency. Optionally, the method 1400 includes estimating a time-of-arrival for the first SC-FDMA random access preamble signal (Block 1430) - this may be used for performing uplink synchronization, for example.

In some embodiments, all of the preamble symbol groups have the same complex amplitude. Further, the first and second subcarrier frequencies may be selected so as to enable phase continuity at the boundaries between preamble symbol groups, where the detected preamble symbols have phase continuity at the boundaries between preamble symbol groups. In some embodiments, the second subcarrier frequency is adjacent to the first subcarrier frequency.

In some embodiments, the length of the cyclic prefix portion is the same as the length of each of the identical symbols and the cyclic prefix portion is identical to each of the identical symbols. In other embodiments, the length of the cyclic prefix is one quarter of the length of each of the identical symbols. In some embodiments, each preamble symbol group has a total length of 1600 microseconds; the plurality of identical symbols in each preamble symbol group consists of three identical symbols, in some embodiments.

As discussed above, different random access preamble signals may be interleaved in the frequency domain, such that they may be distinguished from one another by the base station. Accordingly, some embodiments of the method 1400 may further comprise detecting, in the radio-frequency signal, a second SC-FDMA random access preamble signal, transmitted by a second remote user equipment, where the second SC-FDMA random access preamble signal comprises two or more consecutive preamble symbol groups, each preamble symbol group comprising a cyclic prefix portion and a plurality of identical symbols occupying a single subcarrier of the SC-FDMA random access preamble signal, such that the single subcarrier for at least one of the preamble symbol groups corresponds to a third subcarrier frequency and the single subcarrier for an immediately subsequent one of the preamble symbol groups corresponds to a fourth subcarrier frequency. In these embodiments, the two or more consecutive preamble symbol groups of the second SC-FDMA random access preamble signal may overlap, at least partly, the two or more consecutive preamble symbol groups of the first SC-FDMA random access preamble, and the first subcarrier frequency may equal the fourth subcarrier frequency, or the second subcarrier frequency may equal the third subcarrier frequency, or both.

It should be understood that the methods 1200 and 1400 illustrated in Figures 12 and 14 are examples of the techniques described more fully above. Each of these methods may be modified according to any of the variations and details discussed. The methods illustrated in Figures 12 and 14, and variants thereof, may be implemented using the processing circuits illustrated in Figures 11 and 13, as appropriate, where the processing circuits are configured, e.g., with appropriate program code stored in memory circuits 36, and/or 46, to carry out the operations described above. While some of these embodiments are based on a programmed microprocessor or other programmed processing element, it will be appreciated that not all of the steps of these techniques are necessarily performed in a single microprocessor or even in a single module. Embodiments of the presently disclosed techniques further include computer program products for application in a wireless terminal as well as corresponding computer program products for application in a base station apparatus or other network node apparatus.

This program code or computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) running on a processor such as a digital signal processor, which may collectively be referred to as "circuitry," "a module" or variants thereof.

It will further be appreciated that various aspects of the above-described embodiments can be understood as being carried out by functional "modules," which may be program instructions executing on an appropriate processor circuit, hard-coded digital circuitry and/or analog circuitry, or appropriate combinations thereof.

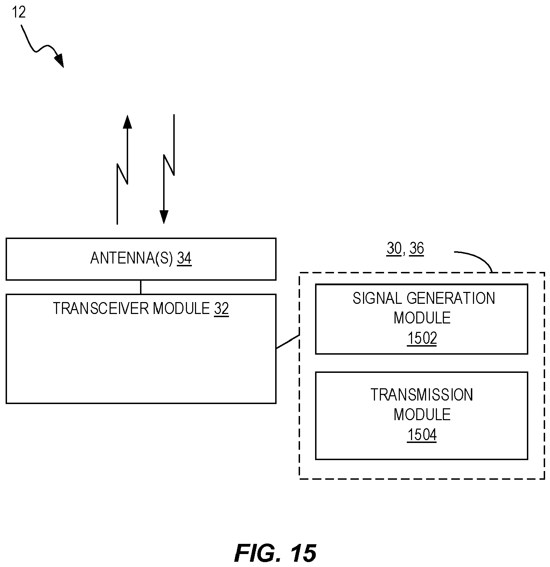

For example, Figure 15 illustrates an example functional module or circuit architecture as may be implemented in a UE 12, e.g., based on the processing circuit 30 and memory circuit 36. The illustrated embodiment at least functionally includes a signal generation module 1502 for generating a random access preamble signal. The implementation also includes a transmission module 1504 for transmitting the random access preamble signal. The generated random access signal comprises two or more consecutive preamble symbol groups, each preamble symbol group comprising a cyclic prefix portion and a plurality of identical symbols occupying a single subcarrier of the SC-FDMA random access preamble signal, such that the single subcarrier for at least one of the preamble symbol groups corresponds to a first subcarrier frequency and the single subcarrier for an immediately subsequent one of the preamble symbol groups corresponds to a second subcarrier frequency. In some embodiments, every second one of the preamble symbol groups corresponds to the second subcarrier frequency and each of the remaining preamble symbol groups corresponds to the first subcarrier frequency.

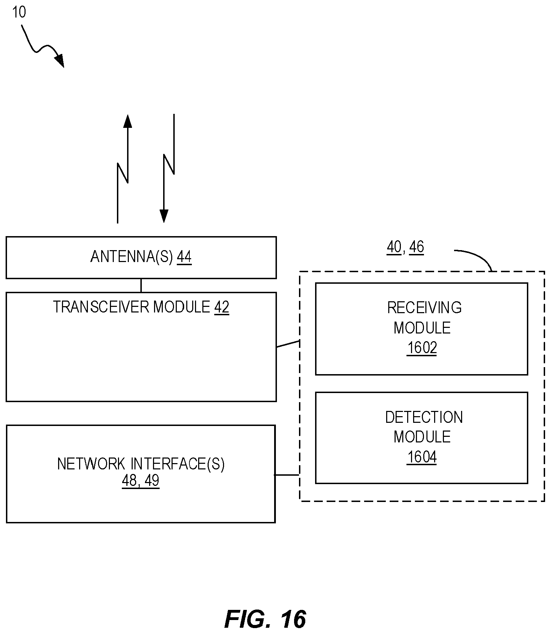

Figure 16 illustrates an example functional module or circuit architecture as may be implemented in a network node, such as a base station 10, e.g., based on the processing circuit 40 and memory circuit 46. The illustrated embodiment at least functionally includes a receiving module 1602 for receiving a radio-frequency signal. The implementation also includes a detection module 1604 for detecting, in the radio-frequency signal, a first SC-FDMA random access preamble signal, transmitted by a first remote radio device. The first random access preamble signal comprises two or more consecutive preamble symbol groups, each preamble symbol group comprising a cyclic prefix portion and a plurality of identical symbols occupying a single subcarrier of the SC-FDMA random access preamble signal, such that the single subcarrier for at least one of the preamble symbol groups corresponds to a first subcarrier frequency and the single subcarrier for an immediately subsequent one of the preamble symbol groups corresponds to a second subcarrier frequency. In some embodiments, for example, every second one of the preamble symbol groups corresponds to the second subcarrier frequency and each of the remaining preamble symbol groups corresponds to the first subcarrier frequency.

Several methods, devices, and systems for generating and receiving random access preambles have been described in detail above. It will be appreciated by persons of ordinary skill in the art that the embodiments encompassed by the present disclosure are not limited to the particular exemplary embodiments described above. In that regard, although illustrative embodiments have been shown and described, a wide range of modification, change, and substitution is contemplated in the foregoing disclosure. It is understood that such variations may be made to the foregoing without departing from the scope of the present disclosure. Accordingly, it is appropriate that the appended claims be construed broadly and in a manner consistent with the present disclosure.

Below follow some further non-limiting examples, detailing some of the above techniques and providing some possible context for their application.

Introduction

At GERAN#62 a new study item named *Cellular System Support for Ultra Low Complexity and Low Throughput Internet of Things* (WI code: FS_loT_LC) was approved to meet the needs of cellular internet of things [1]. The study is open to both a non-legacy based design, and/or a backward compatible evolution of GSM/EDGE.

A narrowband LTE based solution (called NB-LTE) was proposed and included in [2], and is now under investigation under the NB-IoT work item [3] that was approved at RAN#69. The document [2] provided a high level description of the random access concept in NB-LTE such as the subcarrier spacing and multiplexing. The contribution [4] provided a more detailed description regarding the random access channel in NB-LTE. In this contribution, we further improve the design and provide updated performance evaluation results. The main changes in the design are as follows.

- We reduce the previously proposed preamble length 491 to 251. As a result, the random access channel uses 80 kHz bandwidth instead of 160 kHz bandwidth. This helps improve spectral efficiency.

- We propose a new random access design for users with 164 dB MCL. The new design theoretically has 0 dB peak-to-average-power ratio (PAPR) and is good for power amplifier efficiency.

Random Access Usages and Procedures

In the existing LTE random access design, random access serves multiple purposes such as initial access when establishing a radio link, scheduling request, etc. Among others, a main objective of random access is to achieve uplink synchronization, which is important for maintaining the uplink orthogonality in LTE.

LTE random access can be either contention-based or contention-free. The contention-based random access procedure consists of four steps, as illustrated in Figure 1A. Note that only the first step involves physical-layer processing specifically designed for random access, while the remaining three steps follow the same physical-layer processing used in uplink and downlink data transmission. For contention-free random access, the UE uses reserved preambles assigned by the base station. In this case, contention resolution is not needed, and thus only Steps 1 and 2 are required.

**Figure 1A: LTE contention-based random access procedure [7]**

In NB-LTE, random access procedure follows its counterpart in LTE. Due to the reduced bandwidth in NB-LTE, minor revisions of LTE physical random access channel (PRACH) design are required for NB-LTE PRACH. The revision, however, only affects Step 1 (Random Access Preamble), since it is the only step that involves random access specific physical-layer processing.

Physical Random Access Channel Design

Uplink Resource Multiplexing

An example of the multiplexing of PRACH with PUSCH in NB-LTE is shown in Figure 2A. It can be seen that the multiplexing is similar to LTE. PUSCH could be frequency multiplexed with PRACH in PRACH slots. PRACH time-frequency resources can be configured by the base station. The configuration depends on factors such as random access load, cell size, etc.

In NB-LTE, three coverage classes may be defined: basic coverage (144 dB MCL), robust coverage (154 dB MCL), and extreme coverage (164 dB MCL) [2]. Accordingly, different preamble formats (to be introduced below) may be used for users in different coverage classes. The concurrent preamble transmissions of users in different coverage class may lead to potential near-far problems. To mitigate this problem, the preamble transmissions of users in different coverage class may be time multiplexed in NB-LTE, as illustrated in

Figure 2A.

**Figure 2A: Multiplexing of Uplink Physical Channels**

PRACH Formats 0 and 1

In this subsection, we introduce the preamble design for PRACH Formats 0 and 1, which may be used by users with 144 dB MCL and 154 dB MCL respectively.

Preamble Design

In NB-LTE, the subcarrier spacing for PUSCH may for example be 2.5 kHz, reduced by 6 times compared to the LTE 15 kHz subcarrier spacing. In LTE, PRACH subcarrier spacing is 1.25 kHz and the preambles are Zadoff-Chu sequences of length 839. So the total used bandwidth is 1.0488 MHz (excluding guard band).

A seemingly natural choice for NB-LTE PRACH design is to reduce the 1.25 kHz subcarrier spacing also by 6 times and to reuse the length-839 Zadoff-Chu sequences. There are however some problems with this design. First, the reduced subcarrier spacing is 208.3 Hz, which is relatively small considering the frequency offset between the device and base station and Doppler shift. Second, the total used bandwidth for PRACH would be 208.3*839=174.8 kHz, while the total uplink bandwidth is 180 kHz in NB-LTE. As a result, at most two 2.5 kHz subcarriers can be used for PUSCH or left as guard band for in-band deployment, and there is no guard band between PUSCH and PRACH when they are frequency multiplexed. This may cause interference problems.

For PRACH Formats 0 and 1, we propose that PRACH uses 80 kHz bandwidth. On the one hand, large subcarrier spacing is desirable to make the preamble transmission robust to carrier frequency offset (CFO) and Doppler shift. On the other hand, longer Zadoff-Chu sequences based preambles are preferred. This is because orthogonal preambles are derived by applying cyclic shifts to a base Zadoff-Chu sequence. In LTE, different cyclic shifts are applied to cells to in different size ranges [6]. For a given cell size (a given cyclic shift), the longer the preambles, the more the orthogonal preambles. With an 80 kHz bandwidth for PRACH, a tradeoff exists between PRACH subcarrier spacing and preamble length. Further, the choice should enable PRACH to well fit within the overall frame structure in NB-LTE.

Taking into account all the constraints, it is proposed to reduce 1.25 kHz LTE PRACH subcarrier bandwidth by 4 times for NB-LTE PRACH(312.5 Hz subcarrier spacing). The maximum preamble length is thus 80/0.3125=256. To facilitate preamble sequence selection, prime-length Zadoff-Chu sequences are preferred. Since the largest prime number less than 256 is 251, it is proposed to use length-251 Zadoff-Chu sequences as preambles.

In summary, for NB-LTE PRACH Formats 0 and 1, it is proposed to use length-251 Zadoff-Chu sequences mapped to 312.5 Hz spaced subcarriers. The proposed design is shown in Figure 3A. Further, as a working assumption, it is proposed to assume 64 preambles as in LTE are available for NB-LTE. Among the 64 preambles, each cell may configure a subset of them for contention-free random access.

**Figure 3A: Preamble length and subcarrier spacing for PRACH Formats 0 and 1**

PRACH Dimensioning

As mentioned above, the PRACH slot duration and period can be configured depending on the load and cell size. In this subsection, we provide one such configuration.

With 312.5 Hz subcarrier spacing, the preamble sequence duration is 3.2 ms. We propose to use 4 ms as a basic random access segment. Since the preamble sequence duration is 3.2 ms, there are 0.8 ms resources remaining for cyclic prefix (CP) and guard time (GT). To maximize coverage, the CP is dimensioned to be 0.4 ms (ignoring the delay spread, which is on the order of a few us and has marginal impact). Figure 4A illustrates the proposed PRACH CP/GT dimensioning. More PRACH configurations (with different durations, CPs, or GTs) may be defined if necessary.

**Figure 4A: Cyclic prefix/guard period dimensioning for PRACH Formats 0 and 1**

A CP of 0.4 ms duration can address cell sizes up to 60 km, exceeding the 35 km maximum cell size target in GERAN study [1]. Also, with 256 point IFFT for PRACH preamble generation, the CP size amounts to 32 samples, making adding CP straightforward in baseband processing. Though preambles are defined in frequency domain, devices can directly generate the preambles in time domain and thus can bypass the 256 point IFFT operation.

Based on the above CP/GT dimensioning, PRACH Formats 0 and 1 are respectively defined as follows.

• For users with 144 dB MCL, one PRACH segment is sufficient to send their preambles.

- For users with 154 dB MCL, we propose to repeat the basic PRACH segment 12 times.

The formats are summarized in **Table 1.**

**Table 1: PRACH Formats 0 and 1**

| Format | Cell size (km) | Tcp (ms) | Tseq (ms) | Number of repetitions | Number of preambles |
|--------|----------------|----------|-----------|-----------------------|---------------------|
| 0 | 60 | 0.4 | 3.2 | 1 | $N_0$ |
| 1 | 60 | 0.4 | 3.2 | 12 | N1 |

Note: Ni<=64, i=0, 1. The remaining 64-Ni preambles are reserved for contention-free random access for the corresponding coverage class. $N_0$ and $N_1$ can be configured in each cell.

PRACH Format 2

In this subsection, we introduce the preamble design for PRACH Format 2, which may for example be used by users with 164 dB MCL. The motivation is that users with 164 dB MCL are power limited and their performance is sensitive to power amplifier efficiency. The special preamble design of PRACH Format 2 theoretically has 0 dB PAPR and is thus power efficient.

The basic idea of the design is to spread the random access preamble in time, instead of spreading it in frequency (as in PRACH Formats 0 and 1). The design is shown in Figure 5A. The preamble consists of 100 symbols in time and occupies one tone (of 2.5 kHz) in frequency. The transmission however hops between two adjacent tones from symbol to symbol. The hopping is used to enable satisfactory time-of-arrival estimation performance at the BS.

Since the tone bandwidth is 2.5 kHz, the duration of the data part of a normal OFDM symbol is 400 us. To support cell size up to 60 km, we need a CP of length 400 us to accommodate the maximum round-trip delay. A direct transmission would lead to a 50% CP overhead out of the total resource. To reduce the overhead, we repeat each OFDM symbol four times, resulting in a 1600 us symbol duration. The first copy of the OFDM symbol is treated as CP, while the remaining three copies are treated as data. This design reduces the CP overhead from 50% down to 25%. The BS can coherently combine the three copies of the symbol and obtain about 4.8 dB power gain.

To see the 0 dB PAPR property of the preamble in Figure 5A, without loss of generality let us consider the OFDM symbols 1 and 2 that can be written as

$$x(t) = x[1]e^{j2\pi\frac{k}{T}t}, \ \ t \in [0, \ 4T]$$

$$x(t) = x[2]e^{j2\pi\frac{k+1}{T}t}, \ \ t \in [4T, \ 8T]$$

where T=400 us. Within each OFDM symbol of length 4T, the waveform is of constant envelope. At symbol boundary, the phase difference is

$$phase\left( x^*[1]e^{-j2\pi\frac{k}{T}4T}x[2]e^{j2\pi\frac{k+1}{T}4T} \right) = phase( x^*[1]x[2] )$$

Therefore, sending a constant sequence that alternates between the two tones guarantees phase continuity and yields 0 dB PAPR theoretically.

**Figure 5A: PRACH Format 2**

Since each preamble effectively only uses one 2.5 kHz subcarrier, different preambles can be multiplexed in the frequency domain (vs. the CDMA type of preamble multiplexing in Formats 0 and 1). For example, Figure 5A shows the multiplexing of two preambles. In general, $N_3$ tones can be configured for users with 164 dB MCL, where the configuration can vary depending on the traffic load. Limiting the PRACH bandwidth to 80 kHz, the maximum value of $N_3$ is 32.

**Figure 6A: Frequency multiplexing of preambles of Format 2**

The design of PRACH Format 2 shares some commonality with the random access design in NB OFDMA [2], but there are differences in various aspects.

• Commonality: Both designs rely on hopping to enable satisfactory time-of-arrival estimation performance.
• Differences:

  ◦ The two CP lengths (supporting cell size up to 8 km and 35 km respectively) in NB OFDMA are chosen to accommodate the round-trip delays, while here a single CP length is carefully chosen to yield 0 dB PAPR as well as to accommodate the round-trip delay for cell size up to 60 km.
  ◦ The random access pilots in NB OFDMA are embedded in data symbols, while the data transmission is not needed here. Also, it can be costly to send data before uplink synchronization is established (since long CP is needed for large cell size to accommodate round-trip delay).

The PRACH Format 2 is summarized in **Table 2.**

**Table 2: PRACH Formant 2**

| Format | Cell size (km) | Tcp (ms) | Ts (ms) | Preamble duration (ms) | Number of preambles ( number of tones) |
|---|---|---|---|---|---|
| 2 | 60 | 0.4 | 1.2 | 160 | N3 |
| Note: The number $N_3$ of tones used for Format 2 can be configured in each cell. | | | | | |

Performance Evaluation

In this section, simulation results are presented to evaluate NB-LTE PRACH design. The simulation assumptions used are based on the ones outlined in [2], and are summarized in **Table 3.**

**Table 3: Simulation parameters**

| Parameter | Value |
|---|---|
| Channel model | TU |
| Doppler spread | 1 Hz |
| Antenna configuration | 1 Tx; 2 Rx |
| Cell size | 35 km |
| Timing uncertainty | Randomly drawn from [-5.2 us, 233.3+5.2 us]. See Note 1. |
| Frequency error | Uniformly drawn from the set {-50 Hz, 50 Hz}. See Note 2. |
| MS frequency drift | Uniformly drawn from the set {-22.5 Hz/s, 22.5 Hz/s}. |
| Preambles | Zadoff-Chu sequences with roots 1,..., 64. |
| Number of channel realizations | 10,000 |
| Note 1: 233.3 us is the maximum round-trip delay in the cell of size 35 km. The additional +- 5.2 us accounts for the residual timing errors in NB-LTE cell search [5]. The timing uncertainty is drawn based on uniform user location in a hexagonal cell of size 35 km. <br> Note 2: 99% frequency errors are within 50 Hz in NB-LTE cell search [5]. | |

Coverage performance

For PRACH preamble detection at the receiver, a threshold is set such that false alarm detection rate is sufficiently low when thermal noise is fed to the receiver. Different thresholds are chosen based on coverage classes. Simulations have been run with 100,000 realizations to test false alarm rates.

For preamble detection of PRACH Formats 0 and 1 at the receiver, a misdetection is counted if either (1) the peak of accumulated detection statistic does not exceed the pre-determined threshold or (2) the detected preamble index is incorrect when the peak of accumulated detection statistic exceeds the threshold.

For preamble detection of PRACH Format 2 at the receiver, the preamble is in fact indexed by the tone index and thus is known to the BS. In this case, a misdetection is counted if the peak of accumulated detection statistic does not exceed the pre-determined threshold.

Note that there is a tradeoff between false alarm rate and detection rate when setting the threshold. If the threshold is high, the false alarm rate will be lower but the probability that the BS misses detecting transmitted preambles will be higher (and thus detection rate may decrease).

As reference values, LTE specifies that PRACH false alarm rate is 0.1% and PRACH detection rate is 99% [8]. Also, though no agreements have been made, there has been ongoing discussion about relaxing the detection rate to 90% for 15 dB coverage extension in LTE eMTC work.

Basic Coverage

For users in basic coverage (144 dB MCL), the threshold is set such that the false alarm rate is below 0.1%. More accurately, there was only one sample realization where the peak of the accumulated detection statistics fell below the predetermined threshold, as shown in **Table 4.** The corresponding preamble detection rate is 99.77%. Therefore, for users in basic coverage, the preamble transmission performance in NB-LTE is very good, exceeding normal LTE requirements.

**Table 4: Coverage Performance of PRACH Format 0**

| Resource | No. of preambles | SNR (dB) MCL (dB) | False alarm rate | Detection rate |
|---|---|---|---|---|
| 4 ms x 80 kHz | 64 | 0.9 144 | 1/100,000 | 99.77% |

Robust Coverage (TBD)

For users in robust coverage (154 dB MCL), the threshold is set such that the false alarm rate is below 0.1%. More accurately, the false alarm rate is XXX%, as shown in Table 5. The corresponding preamble detection rate is XXX%. Therefore, for users in basic coverage, the LTE false alarm rate requirement is maintained, while detection rate is decreased by 0.88%.

**Table 5: Coverage Performance of PRACH Format 1**

| Resource | No. of preambles | SNR (dB) | MCL (dB) | False alarm rate (%) | Detection rate (%) |
|---|---|---|---|---|---|
| 12 x 4 ms x 80 kHz | 64 | -9.1 | 154 | 0.23% (To be reduced) | 98.83% |

Extreme Coverage

For users in extreme coverage, they use Format 2 for preamble transmission. The results are summarized in Table 6. The threshold is set such that the false alarm rate is about 0.1%. More accurately, the false alarm rate is 0.12%, as shown in Table 6. The corresponding preamble detection rate is 99.42%. Therefore, for these users, the preamble transmission performance in NB-LTE is satisfactory.

**Table 6: Coverage Performance of PRACH Format 2**

| Resource | No. of preambles (number of tones) | SNR (dB) | MCL (dB) | False alarm rate | Detection rate |
|---|---|---|---|---|---|
| 160 ms x 2.5 kHz x 32 | 32 | -4.0 | 164 | 0.12% (To be reduced) | 99.42% |

Based on the false alarm and detection rates performance, **Table 7** summarizes NB-LTE PRACH coverage performance.

**Table 7: PRACH coverage performance**

| 1) | Tx power (dBm) | 23 | 23 | 23 |
|---|---|---|---|---|
| 2) | PSD (dBm/Hz) | -174 | -174 | -174 |
| 3) | Rx noise figure (dB) | 3 | 3 | 3 |
| 4) | Interference margin (dB) | 0 | 0 | 0 |
| 5) | BW (Hz) | 80000 | 80000 | 2500 |
| 6) | Effective noise (dBm) 2)+3)+4)+10*log10(5)) | -121.9691 | -121.9691 | -137.0206 |
| 7) | Required SINR (dB) | 0.9 | -9.1 | -4.0 |
| 8) | Rx sensitivity (dBm) 6)+7) | -121.0691 | -131.0691 | -141.0206 |
| 9) | Rx processing gain (dB) | 0 | 0 | 0 |
| 10) | MCL (dB) 1)-8)+9) | 144.0691 | 154.0691 | 164.0206 |

Time of arrival estimation performance

Among others, a main objective of random access is to achieve uplink synchronization, which is important for maintaining the uplink orthogonality in LTE. To this end, the receiver (base station) estimates the time-of-arrival from the received preamble. Figure 7A shows the distributions of time-of-arrival estimation errors for the PRACH Formats 0 and 1 under 0.9 dB and -9.1 dB, respectively. The results show that the estimation errors are within 2 samples at 160 kHz sampling rate, or equivalently, 12.5 us. In NB-LTE, the shortest CP is 28.2 us (4.7 us LTE CP expanded by 6 times). Therefore, the time-of-arrival estimation errors (up to 12.5 us) can be handled by the CP and thus the time-of-arrival estimation accuracy is satisfactory.

**Figure 7A: Distribution of time-of-arrival estimation errors. Blue curve: Format 0 at 0.9 dB SNR; red curve: Format 1 at -9.1 dB SNR.**

Figure 8A shows the distributions of time-of-arrival estimation errors for the PRACH Format 2 under -4 dB. Compared to Formats 0 and 1, Format 2 only uses 2.5 kHz bandwidth, which fundamentally limits the timing estimation accuracy. The results in Figure 8A show that the estimation errors are within [-4.5, 4.5] samples at 160 kHz sampling rate, or equivalently, [-28.125, 28.125] us at 99%. Further, a biased timing estimator could be used so that 90% of timing estimations are within cyclic prefix range (that has at least 28.2 us long). Though the timing accuracy of Format 2 is not as good as Formats 0 and 1, the degradation is minor since (1) only 10% of users with 164 dB MCL have timing errors outside cyclic prefix range, and (2) they operate at very low SNR and thus their performance is power limited. Further, their impact on users in other coverage classes is also minor since (1) the received power of users with 164 dB MCL is small and (2) they are scheduled on the edge subcarriers.

Figure 8A: Distribution of time-of-arrival estimation errors: Format 2 at -4 dB SNR.

Conclusions

This contribution presents detailed updated PRACH design for NB-LTE. The general design principles of NB-LTE PRACH follow those of LTE, but certain modifications are proposed to adapt the LTE PRACH design to NB-LTE that operates with a much reduced bandwidth. The NB-LTE PRACH design is flexible and can be configured depending on cell size and system load. A cell size of 60 km is supported by the design, which exceeds the 35 km requirement set by the study.
Simulation results presented show that the design can meet 164 dB MCL target and enable satisfactory time-of-arrival estimation at the base stations.

1 References

[1] GP-140421, "New Study Item on Cellular System Support for Ultra Low Complexity and Low Throughput Internet of Things (FS_IoT_LC) (revision of GP-140418)," source VODAFONE Group Plc. GERAN#62.

[2] 3GPP TR 45.820, "Technical Specification Group GSM/EDGE Radio Access Network; Cellular System; Support for Ultra Low Complexity and Low Throughput Internet of Things; (Release 13)," www.3qpp.org.

[3] GP-151621, "New Work Item: NarrowBand IOT (NB-IOT)," source Qualcomm Inc., RAN #69.

[4] GP-150781, "Narrowband LTE - Random access design," source Ericsson LM, Nokia Networks, GERAN #67.

[5] RP-XXX, "Narrowband LTE - Cell Search," source Ericsson..., RAN XXX.

[6] 3GPP Technical Specification 36.211, "Evolved Universal Terrestrial Radio Access (E-UTRA); Physical Channels and Modulation," www.3gpp.org.

[7] 3GPP Technical Specification 36.300, "Evolved Universal Terrestrial Radio Access (E-UTRA) and Evolved Universal Terrestrial Radio Access Network (E-UTRAN); Overall description; Stage 2 (Release 13)," www.3qpp.org.

[8] 3GPP Technical Specification 36.104, "Evolved Universal Terrestrial Radio Access (E-UTRA); Base Station (BS) radio transmission and reception," www.3gpp.org.

**Claims**

1. A method for a user equipment, the method comprising:

    generating (1220) a random access preamble signal comprising a plurality of preamble symbol groups, wherein each preamble symbol group comprises a cyclic prefix portion and a plurality of identical symbols; and transmitting (1230) the random access preamble signal such that each preamble symbol group occupies a single subcarrier,
    **characterized in that** a first preamble symbol group occupies a first subcarrier frequency, and a second preamble symbol group that is adjacent in time to the first symbol group occupies a second subcarrier frequency different from the first subcarrier frequency, wherein the random access preamble signal hops between the first and the second subcarrier frequencies.

2. The method of claim 1, wherein the second subcarrier frequency is adjacent to the first subcarrier frequency.

3. The method of claim 1, wherein phase continuity exists at the boundary between the first and second preamble symbol groups.

4. The method of claim 1, wherein all of the preamble symbol groups in the random access preamble signal have the same complex amplitude.

5. The method of claim 1, wherein the length of the cyclic prefix portion is the same as the length of each of the identical symbols, and the cyclic prefix portion is identical to each of the identical symbols.

6. The method of claim 1, wherein the length of the cyclic prefix portion is one quarter of the length of each of the identical symbols.

7. The method of claim 1, wherein each preamble symbol group has a total length of 1600 microseconds.

8. The method of claim 1, the method further comprising generating (1210) the random access preamble signal using a preamble configuration selected from a plurality of pre-determined preamble configurations, wherein the selected preamble configuration defines at least the first and second subcarrier frequencies.

9. A method for a base station, the method comprising:

    receiving (1410) a radio-frequency signal; and
    detecting (1420), in the radio-frequency signal, a first random access preamble signal, transmitted by a first remote user equipment, wherein the first random access preamble signal comprises a plurality of preamble symbol groups, each preamble symbol group comprising a cyclic prefix portion and a plurality of identical symbols, such that each preamble symbol group occupies a single subcarrier,
    **characterized in that** a first preamble symbol group occupies a first subcarrier frequency, and a second preamble symbol group that is adjacent in time to the first symbol group occupies a second subcarrier frequency different from the first subcarrier frequency, wherein the first random access preamble signal hops between the first and the second subcarrier frequencies.

10. A user equipment comprising:

    one or more processing circuits (30, 36) configured to generate a random access preamble signal comprising a plurality of preamble symbol groups, each preamble symbol group comprising a cyclic prefix portion and a plurality of identical symbols; and
    a radio transceiver (32) configured to transmit the random access preamble signal from the user equipment to a base station, such that each preamble symbol group occupies a single subcarrier,
    **characterized in that** the radio transceiver is further configured to transmit the random access preamble, wherein a first preamble symbol group occupies a first subcarrier frequency, and a second preamble symbol group that is adjacent in time to the first symbol group occupies a second subcarrier frequency different from the first subcarrier frequency, wherein the first random access preamble signal hops between the first and the second subcarrier frequencies.

11. The user equipment of claim 10, wherein the second subcarrier frequency is adjacent to the first subcarrier frequency.

12. The user equipment of claim 10, wherein the one or more processing circuits (30, 36) are configured to generate the random access preamble signal such that phase continuity exists at the boundary between the first and second preamble symbol groups.

13. The user equipment of claim 10, wherein the one or more processing circuits (30, 36) are configured to generate the random access preamble signal such that all of the preamble symbol groups in the random access preamble signal have the same complex amplitude.

14. The user equipment of claim 10, wherein the one or more processing circuits (30, 36) are further configured to generating the random access preamble signal using a preamble configuration selected from a plurality of predetermined preamble configurations, wherein the selected preamble configuration defines at least the first and second subcarrier frequencies.

15. A base station comprising:
a radio transceiver (42) configured to communicate with one or more remote user equipments; and one or more processing circuits (40, 46) configured to:

receive a radio-frequency signal, using the radio transceiver; and
detect, in the radio-frequency signal, a first random access preamble signal, transmitted by a first remote user equipment, wherein the first random access preamble signal comprises a plurality of preamble symbol groups, each preamble symbol group comprising a cyclic prefix portion and a plurality of identical symbols, such that each preamble symbol group occupies a single subcarrier,
**characterized in that** the one or more processing circuits are further configured to detect the first random access preamble, wherein a first preamble symbol group occupies a first subcarrier frequency, and a second preamble symbol group that is adjacent in time to the first symbol group occupies a second subcarrier frequency different from the first subcarrier frequency, wherein the first random access preamble signal hops between the first and the second subcarrier frequencies.

**Patentansprüche**

1. Verfahren für ein Benutzergerät, wobei das Verfahren Folgendes umfasst:

Generieren (1220) eines Direktzugriffspräambelsignals, das eine Vielzahl von Präambelsymbolgruppen umfasst, wobei jede Präambelsymbolgruppe einen zyklischen Präfixabschnitt und eine Vielzahl von identischen Symbolen umfasst; und
Übertragen (1230) des Direktzugriffspräambelsignals, sodass jede Präambelsymbolgruppe einen einzigen Subträger belegt,
**dadurch gekennzeichnet, dass** eine erste Präambelsymbolgruppe eine erste Subträgerfrequenz belegt und eine zweite Präambelsymbolgruppe, die zeitlich zu der ersten Symbolgruppe benachbart ist, eine zweite Subträgerfrequenz belegt, die sich von der ersten Subträgerfrequenz unterscheidet, wobei das Direktzugriffspräambelsignal zwischen der ersten und der zweiten Subträgerfrequenz hüpft.

2. Verfahren nach Anspruch 1, wobei die zweite Subträgerfrequenz zu der ersten Subträgerfrequenz benachbart ist.

3. Verfahren nach Anspruch 1, wobei Phasenkontinuität an der Grenze zwischen der ersten und zweiten Präambelsymbolgruppe besteht.

4. Verfahren nach Anspruch 1, wobei alle Präambelsymbolgruppen in dem Direktzugriffspräambelsignal die gleiche komplexe Amplitude aufweisen.

5. Verfahren nach Anspruch 1, wobei die Länge des zyklischen Präfixabschnitts die gleiche wie die Länge jedes der identischen Symbole ist und der zyklische Präfixabschnitt mit jedem der identischen Symbole identisch ist.

6. Verfahren nach Anspruch 1, wobei die Länge des zyklischen Präfixabschnitts ein Viertel der Länge jedes der identischen Symbole ist.

7. Verfahren nach Anspruch 1, wobei jede Präambelsymbolgruppe eine Gesamtlänge von 1600 Mikrosekunden aufweist.

8. Verfahren nach Anspruch 1, wobei das Verfahren ferner Generieren (1210) des Direktzugriffspräambelsignals unter Verwendung einer Präambelkonfiguration umfasst, die aus einer Vielzahl von vorbestimmten Präambelkonfigurationen ausgewählt ist, wobei die ausgewählte Präambelkonfiguration mindestens die erste und zweite Subträgerfrequenz definiert.

9. Verfahren für eine Basisstation, wobei das Verfahren Folgendes umfasst:

Empfangen (1410) eines Hochfrequenzsignals; und
Detektieren (1420), in dem Hochfrequenzsignal, eines ersten Direktzugriffspräambelsignals, das durch ein erstes entferntes Benutzergerät übertragen wird, wobei das erste Direktzugriffspräambelsignal eine Vielzahl von Präambelsymbolgruppen umfasst, wobei jede Präambelsymbolgruppe einen zyklischen Präfixabschnitt und eine Vielzahl von identischen Symbolen umfasst, sodass jede Präambelsymbolgruppe einen einzigen Subträger belegt,
**dadurch gekennzeichnet, dass** eine erste Präambelsymbolgruppe eine erste Subträgerfrequenz belegt und eine zweite Präambelsymbolgruppe, die zeitlich zu der ersten Symbolgruppe benachbart ist, eine zweite Subträgerfrequenz belegt, die sich von der ersten Subträgerfrequenz unterscheidet, wobei das erste Direktzugriffspräambelsignal zwischen der ersten und der zweiten Subträgerfrequenz hüpft.

10. Benutzergerät, umfassend:

eine oder mehrere Verarbeitungsschaltungen (30, 36), die dazu konfiguriert sind, ein Direktzugriffspräambelsignal zu generieren, das eine Vielzahl von Präambelsymbolgruppen umfasst, wobei jede Präambelsymbolgruppe einen zyklischen Präfixabschnitt und eine Vielzahl von identischen Symbolen umfasst; und
einen Funksendeempfänger (32), der dazu konfiguriert ist, das Direktzugriffspräambelsignal von dem Benutzergerät an eine Basisstation zu übertragen, sodass jede Präambelsymbolgruppe einen einzigen Subträger belegt,
**dadurch gekennzeichnet, dass** der Funksendeempfänger ferner dazu konfiguriert ist, die Direktzugriffspräambel zu übertragen, wobei eine erste Präambelsymbolgruppe eine erste Subträgerfrequenz belegt und eine zweite Präambelsymbolgruppe, die zeitlich zu der ersten Symbolgruppe benachbart ist, eine zweite Subträgerfrequenz belegt, die sich von der ersten Subträgerfrequenz unterscheidet, wobei das erste Direktzugriffspräambelsignal zwischen der ersten und der zweiten Subträgerfrequenz hüpft.

11. Benutzergerät nach Anspruch 10, wobei die zweite Subträgerfrequenz zu der ersten Subträgerfrequenz benachbart ist.

12. Benutzergerät nach Anspruch 10, wobei die eine oder die mehreren Verarbeitungsschaltungen (30, 36) dazu konfiguriert sind, das Direktzugriffspräambelsignal zu generieren, sodass Phasenkontinuität an der Grenze zwischen der ersten und zweiten Präambelsymbolgruppe besteht.

13. Benutzergerät nach Anspruch 10, wobei die eine oder die mehreren Verarbeitungsschaltungen (30, 36) dazu konfiguriert sind, das Direktzugriffspräambelsignal zu generieren, sodass alle Präambelsymbolgruppen in dem Direktzugriffspräambelsignal die gleiche komplexe Amplitude aufweisen.

14. Benutzergerät nach Anspruch 10, wobei die eine oder die mehreren Verarbeitungsschaltungen (30, 36) ferner dazu konfiguriert sind, das Direktzugriffspräambelsignal unter Verwendung einer Präambelkonfiguration zu generieren, die aus einer Vielzahl von vorbestimmten Präambelkonfigurationen ausgewählt ist, wobei die ausgewählte Präambelkonfiguration mindestens die erste und zweite Subträgerfrequenz definiert.

15. Basisstation, umfassend:

einen Funksendeempfänger (42), der dazu konfiguriert ist, mit einem oder mehreren entfernten Benutzergeräten zu kommunizieren; und eine oder mehrere Verarbeitungsschaltungen (40, 46), die zu Folgendem konfiguriert sind:

Empfangen eines Hochfrequenzsignals unter Verwendung des Funksendeempfängers; und

Detektieren, in dem Hochfrequenzsignal, eines ersten Direktzugriffspräambelsignals, das durch ein erstes entferntes Benutzergerät übertragen wird, wobei das erste Direktzugriffspräambelsignal eine Vielzahl von Präambelsymbolgruppen umfasst, wobei jede Präambelsymbolgruppe einen zyklischen Präfixabschnitt und eine Vielzahl von identischen Symbolen umfasst, sodass jede Präambelsymbolgruppe einen einzigen Subträger belegt, **dadurch gekennzeichnet, dass** die eine oder die mehreren Verarbeitungsschaltungen ferner dazu konfiguriert sind, die erste Direktzugriffspräambel zu detektieren, wobei eine erste Präambelsymbolgruppe eine erste Subträgerfrequenz belegt und eine zweite Präambelsymbolgruppe, die zeitlich zu der ersten Symbolgruppe benachbart ist, eine zweite Subträgerfrequenz belegt, die sich von der ersten Subträgerfrequenz unterscheidet, wobei das erste Direktzugriffspräambelsignal zwischen der ersten und der zweiten Subträgerfrequenz hüpft.

## Revendications

1. Procédé pour un équipement utilisateur, le procédé comprenant :

la génération (1220) d'un signal de préambule d'accès aléatoire comprenant une pluralité de groupes de symboles de préambule, dans lequel chaque groupe de symboles de préambule comprend une partie de préfixe cyclique et une pluralité de symboles identiques ; et

la transmission (1230) du signal de préambule d'accès aléatoire de sorte que chaque groupe de symboles de préambule occupe une seule sous-porteuse,

**caractérisé en ce qu'**un premier groupe de symboles de préambule occupe une première fréquence de sous-porteuse, et un second groupe de symboles de préambule qui est adjacent dans le temps au premier groupe de symboles occupe une seconde fréquence de sous-porteuse différente de la première fréquence de sous-porteuse, dans lequel le signal de préambule d'accès aléatoire saute entre les première et seconde fréquences de sous-porteuse.

2. Procédé selon la revendication 1, dans lequel la seconde fréquence de sous-porteuse est adjacente à la première fréquence de sous-porteuse.

3. Procédé selon la revendication 1, dans lequel une continuité de phase existe à la frontière entre les premier et second groupes de symboles de préambule.

4. Procédé selon la revendication 1, dans lequel tous les groupes de symboles de préambule dans le signal de préambule d'accès aléatoire ont la même amplitude complexe.

5. Procédé selon la revendication 1, dans lequel la longueur de la partie de préfixe cyclique est la même que la longueur de chacun des symboles identiques, et la partie de préfixe cyclique est identique à chacun des symboles identiques.

6. Procédé selon la revendication 1, dans lequel la longueur de la partie de préfixe cyclique est un quart de la longueur de chacun des symboles identiques.

7. Procédé selon la revendication 1, dans lequel chaque groupe de symboles de préambule a une longueur totale de 1600 microsecondes.

8. Procédé selon la revendication 1, le procédé comprenant en outre la génération (1210) du signal de préambule d'accès aléatoire en utilisant une configuration de préambule sélectionnée parmi une pluralité de configurations de préambule prédéterminées, dans lequel la configuration de préambule sélectionnée définit au moins les première et seconde fréquences de sous-porteuse.

9. Procédé pour une station de base, le procédé comprenant :

la réception (1410) d'un signal radiofréquence ; et

la détection (1420), dans le signal radiofréquence, d'un premier signal de préambule d'accès aléatoire, transmis par un premier équipement utilisateur distant, dans lequel le premier signal de préambule d'accès aléatoire comprend une pluralité de groupes de symboles de préambule, chaque groupe de symboles de préambule comprenant une partie de préfixe cyclique et une pluralité de symboles identiques, de sorte que chaque groupe de symboles de préambule occupe une seule sous-porteuse,

**caractérisé en ce qu'**un premier groupe de symboles de préambule occupe une première fréquence de sous-porteuse, et un second groupe de symboles de préambule qui est adjacent dans le temps au premier groupe de symboles occupe une seconde fréquence de sous-porteuse différente de la première fréquence de sous-porteuse, dans lequel le premier signal de préambule d'accès aléatoire saute entre les première et seconde fréquences de sous-porteuse.

10. Équipement utilisateur comprenant :

un ou plusieurs circuits de traitement (30, 36) configurés pour générer un signal de préambule d'accès aléatoire comprenant une pluralité de groupes de symboles de préambule, chaque groupe de symboles de préambule comprenant une partie de préfixe cyclique et une pluralité de symboles identiques ; et

un émetteur-récepteur radio (32) configuré pour transmettre le signal de préambule d'accès aléatoire depuis l'équipement utilisateur jusqu'à une station de base, de sorte que chaque groupe de symboles de préambule occupe une seule sous-porteuse,

**caractérisé en ce que** l'émetteur-récepteur radio est en outre configuré pour transmettre le préambule d'accès aléatoire, dans lequel un premier groupe de symboles de préambule occupe une première fréquence de sous-porteuse, et un second groupe de symboles de préambule qui est adjacent dans le temps au premier groupe de symboles occupe une seconde fréquence de sous-porteuse différente de la première fréquence de sous-porteuse, dans lequel le premier signal de préambule d'accès aléatoire saute entre les première et seconde fréquences de sous-porteuse.

11. Équipement utilisateur selon la revendication 10, dans lequel la seconde fréquence de sous-porteuse est adjacente à la première fréquence de sous-porteuse.

12. Équipement utilisateur selon la revendication 10, dans lequel les un ou plusieurs circuits de traitement (30, 36) sont configurés pour générer le signal de préambule d'accès aléatoire de sorte qu'une continuité de phase existe à la frontière entre les premier et second groupes de symboles de préambule.

13. Équipement utilisateur selon la revendication 10, dans lequel les un ou plusieurs circuits de traitement (30, 36) sont configurés pour générer le signal de préambule d'accès aléatoire de sorte que tous les groupes de symboles de préambule dans le signal de préambule d'accès aléatoire aient la même amplitude complexe.

14. Équipement utilisateur selon la revendication 10, dans lequel les un ou plusieurs circuits de traitement (30, 36) sont en outre configurés pour générer le signal de préambule d'accès aléatoire en utilisant une configuration de préambule sélectionnée parmi une pluralité de configurations de préambule prédéterminées, dans lequel la configuration de préambule sélectionnée définit au moins les première et seconde fréquences de sous-porteuse.

15. Station de base comprenant :

un émetteur-récepteur radio (42) configuré pour communiquer avec un ou plusieurs équipements utilisateurs distants ; et un ou plusieurs circuits de traitement (40, 46) configurés pour :
recevoir un signal radiofréquence, à l'aide de l'émetteur-récepteur radio ; et
détecter, dans le signal radiofréquence, un premier signal de préambule d'accès aléatoire, transmis par un premier équipement utilisateur distant, dans lequel le premier signal de préambule d'accès aléatoire comprend une pluralité de groupes de symboles de préambule, chaque groupe de symboles de préambule comprenant une partie de préfixe cyclique et une pluralité de symboles identiques, de sorte que chaque groupe de symboles de préambule occupe une seule sous-porteuse,

**caractérisé en ce que** les un ou plusieurs circuits de traitement sont en outre configurés pour détecter le premier préambule d'accès aléatoire, dans lequel un premier groupe de symboles de préambule occupe une première fréquence de sous-porteuse, et un second groupe de symboles de préambule qui est adjacent dans le temps au premier groupe de symboles occupe une seconde fréquence de sous-porteuse différente de la première fréquence de sous-porteuse, dans lequel le premier signal de préambule d'accès aléatoire saute entre les première et seconde fréquences de sous-porteuse.

FIG. 1

UE                                                eNB

① ——————— RANDOM ACCESS PREAMBLE ———————→

← ——————— RANDOM ACCESS RESPONSE ———————  ②

③ ——————— SCHEDULED TRANSMISSION ———————→

← ——————— CONTENTION RESOLUTION ———————  ④

## FIG. 2

**FIG. 3**

FIG. 4

*FIG. 5*

*FIG. 6*

FIG. 7

EP 3 565 363 B1

2.5 kHz

2.5 kHz

CP

CP

CP

CP

CP

CP

CP

CP

PREAMBLE 1

PREAMBLE 2

**FIG. 8**

PREAMBLE 1

PREAMBLE 2

*FIG. 9*

FIG. 10

**FIG. 11**

1200

```
┌ ─ ─ ─ ─ ─ ─ ─ ─ ─ ─ ─ ─ ─ ─ ─ ─ ─ ─ ─ ─ ─ ─ ┐
│     SELECT A PREAMBLE CONFIGURATION FROM A     │
│     PLURALITY OF PRE-DETERMINED PREAMBLE       │
│  CONFIGURATIONS, WHEREIN THE SELECTED PREAMBLE │
│     CONFIGURATION DEFINES FIRST AND SECOND     │
│            SUBCARRIER FREQUENCIES              │
│                    1210                        │
└ ─ ─ ─ ─ ─ ─ ─ ─ ─ ─ ─ ─ ─ ─ ─ ─ ─ ─ ─ ─ ─ ─ ┘
```

```
┌─────────────────────────────────────────────┐
│     GENERATE A RANDOM ACCESS PREAMBLE SIGNAL   │
│     COMPRISING CONSECUTIVE PREAMBLE SYMBOL     │
│        GROUPS, EACH PREAMBLE SYMBOL GROUP      │
│      COMPRISING A CYCLIC PREFIX PORTION AND A   │
│     PLURALITY OF IDENTICAL SYMBOLS OCCUPYING A  │
│      SINGLE SUBCARRIER OF THE RANDOM ACCESS     │
│        PREAMBLE SIGNAL, SUCH THAT THE SINGLE    │
│   SUBCARRIER FOR AT LEAST ONE PREAMBLE SYMBOL   │
│     GROUP CORRESPONDS TO A FIRST SUBCARRIER     │
│   FREQUENCY AND THE SINGLE SUBCARRIER FOR AN    │
│  IMMEDIATELY SUBSEQUENT PREAMBLE SYMBOL GROUP   │
│ CORRESPONDS TO A SECOND SUBCARRIER FREQUENCY    │
│                    1220                        │
└─────────────────────────────────────────────┘
```

```
┌─────────────────────────────────────────────┐
│                                                │
│   TRANSMIT THE RANDOM ACCESS PREAMBLE SIGNAL   │
│                    1230                        │
│                                                │
└─────────────────────────────────────────────┘
```

*FIG. 12*

**FIG. 13**

1400

RECEIVE A RADIO-FREQUENCY SIGNAL
1410

DETECT, IN THE RADIO-FREQUENCY SIGNAL, A FIRST RANDOM ACCESS PREAMBLE SIGNAL, TRANSMITTED BY A FIRST REMOTE RADIO DEVICE, WHEREIN THE FIRST RANDOM ACCESS PREAMBLE SIGNAL COMPRISES TWO OR MORE CONCATENATED PREAMBLE SYMBOL GROUPS, EACH PREAMBLE SYMBOL COMPRISING A SINGLE TONE, WHEREIN THE SINGLE TONE FOR A FIRST PREAMBLE SYMBOL GROUP CORRESPONDS TO A FIRST SUBCARRIER FREQUENCY AND THE SINGLE TONE FOR A SUBSEQUENT PREAMBLE SYMBOL GROUP CORRESPONDS TO A SECOND SUBCARRIER FREQUENCY
1420

ESTIMATE A TIME-OF-ARRIVAL FOR THE FIRST PREAMBLE SIGNAL
1430

*FIG. 14*

12

ANTENNA(S) 34

TRANSCEIVER MODULE 32

30, 36

SIGNAL GENERATION
MODULE
1502

TRANSMISSION
MODULE
1504

*FIG. 15*

10

ANTENNA(S) 44

TRANSCEIVER MODULE 42

NETWORK INTERFACE(S)
48, 49

40, 46

RECEIVING
MODULE
1602

DETECTION
MODULE
1604

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014110714 A1

### Non-patent literature cited in the description

- New Study Item on Cellular System Support for Ultra Low Complexity and Low Throughput Internet of Things (FS_IoT_LC) (revision of GP-140418). *GP-140421*
- Technical Specification Group GSM/EDGE Radio Access Network; Cellular System; Support for Ultra Low Complexity and Low Throughput Internet of Things; (Release 13). *3GPP TR 45.820, www.3qpp.org.*
- New Work Item: NarrowBand IOT (NB-IOT). *GP-151621*
- Narrowband LTE - Random access design. *GP-150781*
- Narrowband LTE - Cell Search. *RP-XXX*
- Evolved Universal Terrestrial Radio Access (E-UTRA); Physical Channels and Modulation. *3GPP Technical Specification 36.211, www.3gpp.org*
- Evolved Universal Terrestrial Radio Access (E-UTRA) and Evolved Universal Terrestrial Radio Access Network (E-UTRAN); Overall description; Stage 2 (Release 13). *3GPP Technical Specification 36.300, www.3qpp.org.*
- Evolved Universal Terrestrial Radio Access (E-UTRA); Base Station (BS) radio transmission and reception. *3GPP Technical Specification 36.104, www.3gpp.org*